# EUROPÄISCHE PATENTSCHRIFT

(11) **EP 1 884 796 B1**
(45) Veröffentlichungstag und Bekanntmachung des Hinweises auf die Patenterteilung: **08.04.2009**
(21) Anmeldenummer: 07012559.6
(22) Anmeldetag: 27.06.2007
(51) Int. Cl.: G01S 7/40, G01S 7/497, G01S 7/52, G01B 5/255

(54) **Vorrichtung zum Anbringen eines Lasers und Verfahren zum Justieren eines Abstandsregelsystems**
Device for attaching a laser and a method of adjusting a distance control system
Dispositif pour fixer un laser et un procédé d'ajustement d'un système de contrôle de distance

(30) Priorität: 27.07.2006 DE 102006035534
(43) Veröffentlichungstag der Anmeldung: 06.02.2008
(73) Patentinhaber: Rogg, Werner, 78056 Villingen-Schwenningen (DE)
(72) Erfinder: Rogg, Werner, 78056 Villingen-Schwenningen (DE)
(74) Vertreter: Modrow, Stephanie

(56) Entgegenhaltungen:
- EP-A- 1 455 161
- EP-A2- 1 118 494
- DE-A1- 19 853 579
- DE-B3-4102004 026 04
- DE-U1- 20 202 500

## Beschreibung

Die Beschreibung betrifft eine Vorrichtung zum Anbringen eines Lasers an einem Kraftfahrzeug und ein Verfahren zum Justieren eines Abstandsregelsystems in Kraftfahrzeugen.

Aus der DE 199 11 017 A1 ist ein Verfahren zur Justierung eines Abstandsensors eines Kraftfahrzeugs bekannt, wobei die Justierung des Abstandsensors bezogen auf die geometrische Fahrachse des Kraftfahrzeuges vorgenommen wird. Dazu wird an den Vorderrädern jeweils ein Messstab zentriert, wobei sich auf den Messstäben jeweils eine Markierung in einem definierten Abstand zu den Vorderrädern befindet. An den Markierungen kann eine Lichtquelle derart angeordnet werden, dass diese nach vorn Licht abstrahlt. Eine gedachte Linie durch die beiden Markierungen steht im rechten Winkel zur geometrischen Fahrachse. Eine Überprüfung der Ausrichtung der Abstrahlrichtung eines an dem Auto angebrachten Abstandsensors, welche durch einen an dem Abstandsensor in definierter Position angeordneten Laser simuliert wird, relativ zu der geometrischen Fahrachse erfolgt mittels eines Scheinwerfereinstellgeräts. Dieses Verfahren ist jedoch sehr aufwendig, da eine exakte Justierung sowohl der Lichtquellen als auch des Scheinwerfereinstellgeräts von Nöten ist. Zudem wird die Längsachse des Fahrzeugs nur durch die beiden Markierungen an den Messstäben definiert, wobei die gedachte Linie durch diese beide Markierungen nur eine Hilfskonstruktion darstellt und möglicherweise von der tatsächlichen Längsachse abweichen kann. Insbesondere wird in der Regel die Fahrzeuglängsachse senkrecht zur Hinterachse des Fahrzeuges definiert, da diese Räder die Fahrtrichtung des Fahrzeuges vorgeben.

Sowohl die DE 199 27 573 C1 als auch die DE 10 2004 026 044 B3 offenbaren eine Vorrichtung zum Justieren eines an einem Fahrzeug montierten Abstandsensors, bei welchem seitlich am Fahrzeug im rechten Winkel zur Hinterachse ein Laser nach vorn weisend angeordnet wird. An dem Abstandsensor wird ein weiterer Laser mit Ausrichtung der Laserstrahlrichtung parallel zur Achse der Strahlungsrichtung des Abstandsensors angeordnet. Gemäß der DE 199 27 573 C1 werden die Laserstrahlen auf einen Reflektor abgebildet, welcher horizontal verschwenkbar ist, so dass der auf ihn treffende Lichtstrahl in seiner Einfallsrichtung zurückgeworfen werden kann. Mit Hilfe der Reflektoren können die Einzelspuren der beiden Räder bestimmt werden. Anschließend kann der Abstandsensor ebenfalls mit Hilfe eines Reflektors auf die Fahrachse justiert werden. Gemäß der DE 10 2004 026 044 B3 werden die Laserstrahlen auf eine vor dem Fahrzeug an einem in Richtung der Fahrzeuglängsachse verfahrbaren Messwagen angeordnete Messskala abgebildet. Die Abstände der Abbildungen der Laserstrahlen der Messskala werden bei wenigstens zwei unterschiedlichen Positionen des Messwagens erfasst und verglichen. Nachteilig bei dieser Anordnung ist, dass an jedem Rad der Hinterachse ein Laser angeordnet werden muss, um die Spur der beiden Räder bestimmen und bei der Messung berücksichtigen zu können. Weiterhin ist die Verwendung von zwei Lasern zur Justierung eines Abstandsensor kosten- und zeitaufwendig.

Weiterhin bekannt sind Vorrichtungen, mit Hilfe derer ein Laser an der Felge eines Rades derart angeordnet werden kann, dass die Laserstrahlrichtung senkrecht zur Achse der Felge steht. Die Felge kann jedoch schief relativ zur Hinterachse angeordnet sein, so dass während einer Umdrehung der Felge um die Hinterachse eine Präzision oder ein Versatz der Achse der Felge zur Hinterachse auftreten können. Selbst wenn die Hinterräder keine Spur aufweisen sollten, ist mit einer derartigen Vorrichtung keine exakte Ausrichtung des Lasers relativ zur Hinterachse und somit parallel zur Fahrzeugachse gewährleistet.

Weitere Vorrichtungen zum Anbringen eines Lasers an einem Kraftfahrzeug sind aus DE 19 853 579 und EP 1 118 494 bekannt.

Aufgabe der Erfindung ist es daher, eine Vorrichtung bereitzustellen, mit welcher eine exakte Ausrichtung des Lasers relativ zur Hinterachse des Fahrzeuges, insbesondere im rechten Winkel, gewährleistet werden kann. Des weiteren soll ein vereinfachtes Verfahren zur Justierung eines Abstandsensors eines Kraftfahrzeuges angegeben werden.

Die Aufgabe wird gelöst durch eine Vorrichtung zum Anbringen eines Lasers mit den Merkmalen des Patentanspruchs 1 sowie ein Verfahren zum Justieren eines Abstandsregelsystems mit den Merkmalen des Patentanspruchs 9.

Vorteilhafte Ausgestaltungen und Weiterbildungen der Erfindungen sind in den Unteransprüchen angegeben.

Erfindungsgemäß wird der Laser nicht an der Felge eines Rades, sondern an der Radnabe eines Kraftfahrzeugs angeordnet. Dazu wird erfindungsgemäß eine Vorrichtung mit einer Grundplatte mit einem Mittelpunkt bereit gestellt, wobei auf einer ersten Seite der Grundplatte drei Füße mit ihrem ersten Ende in jeweils einem Ansatzpunkt angeordnet sind. Die anderen Ende der Füße können auf die Radnabe aufgesetzt werden, wobei an und/oder in dem zweiten Ende der Füße ein Magnet angeordnet ist, über welchen die Füße an der Radnabe einfach und zuverlässig fixiert werden können. Der Abstand der Ansatzpunkte der Füße Füße zu dem Mittelpunkt der Grundplatte ist für jeden Ansatzpunkt gleich. Auf der zweiten Seite der Grundplatte, welche der ersten Seite der Grundplatte gegenüber liegt, ist ein Haltestab mit seinem ersten Ende an dem Mittelpunkt der Grundplatte angeordnet. Die Längsachse des Haltestabs steht dabei senkrecht zur Grundplatte. An dem zweiten Ende des Haltestabs ist eine Halterung für ein ersten Laser derart angeordnet, dass bei Anordnung des Lasers in der ersten Halterung die Strahlrichtung des Lasers senkrecht zur Längsachse des Haltestabs verläuft. Mit Hilfe der drei Füße kann die Vorrichtung derart an der Radnabe angeordnet werden, dass die Längsachse des Haltestabs in Verlängerung der Längsachse der Hinterachse des Kraftfahrzeuges liegt. Dadurch, dass der Laser in der Haltevorrichtung derart angeordnet ist, dass die Strahlrichtung des Lasers senkrecht zur Längsachse des Haltestabs verläuft, ist somit gewährleistet, dass die Strahlrichtung des Lasers exakt senkrecht zur Hinterachse des Kraftfahrzeugs und somit exakt parallel zur Fahrzeuglängsachse verläuft. Die Fahrzeuglängsachse ist dabei als Mittelachse der Hinterachse des Kraftfahrzeuges definiert. Durch Anbringen der Vorrichtung an der Radnabe ist somit eine exakte Ausrichtung des Lasers relativ zu der Fahrzeuglängsachse einfach und präzise ohne großen Aufwand möglich.

Vorzugsweise ist die Grundplatte Y-förmig mit drei Schenkeln ausgebildet. Einerseits kann somit die Grundplatte möglichst materialsparend und möglichst leicht gefertigt werden. Andererseits verdeckt eine Y-förmige Grundplatte nicht die Sicht auf die Radnabe und ist zudem zwischen unterschiedlichen Komponenten, welche in der Nähe der Radnabe angeordnet sind, wie beispielsweise Reifen oder Blendenhalterung, einfach auf die Radnabe aufsetzbar, ohne dass die anderen Komponenten in aufwendigen Arbeitsschritten entfernt werden müssen.

Bei einer besonders vorteilhaften Weiterbildung schließen zumindest zwei der Schenkel der Y-förmigen Grundplatte einen Winkel von 60° bis 100°, vorzugsweise einen Winkel von etwa 70°, ein. Der Winkel sollte derart ausgebildet sein, dass sichergestellt ist, dass die zweiten Enden der Füße eben auf den Radnabendeckel, insbesondere zwischen die Radnabendeckelschrauben, aufgesetzt werden können.

Bei einer besonders vorteilhaften Ausgestaltung der Erfindung ist zumindest einer der Schenkel der Y-förmigen Grundplatte um den Mittelpunkt der Grundplatte in der Ebene der Grundplatte drehbar. Dadurch wird ermöglicht, dass die Füße derart zueinander ausgerichtet werden können, dass jeder Fuß eben auf dem Radnabendeckel aufgesetzt werden kann, so dass die Vorrichtung auch auf unterschiedlich ausgestaltete Radnabendeckel mit einer unterschiedlichen Anzahl an Radnabendeckelschrauben aufgesetzt werden kann.

Bei einer besonderes vorteilhaften Ausgestaltung der Erfindung ist die Halterung für den ersten Laser um die Längsachse des Haltestabs drehbar angeordnet. Dadurch wird ermöglicht, dass bei beliebiger Drehung der Grundplatte um den Mittelpunkt der Grundplatte, welche nötig sein kann, um die Füße der Vorrichtung eben auf den Radnabendeckel aufsetzen zu können, die Halterung so ausgerichtet werden kann, dass der Laser horizontal entlang des Fahrzeugs nach vorn strahlen kann.

Die zwei Enden der Füße weisen eine Anlagenkontur auf, die an einer Anlagekontur der Radnabe anlegbar ist. Dadurch wird gewährleistet, dass die Vorrichtung in einer gewünschten Position relativ zum Radnabendeckel angeordnet ist, wobei die Anlagekonturen derart aufeinander abgestimmt sein sollten, dass gewährleistet ist, dass bei Anlagen der Vorrichtung auf die Radnabe die Längsachse des Haltestabs in Verlängerung der Längsachse der Hinterachse des Kraftfahrzeugs verläuft.

Vorzugsweise sind die ersten Enden der Füße als Kreisscheiben ausgebildet, da diese besonderes einfach gefertigt werden können und sich auch bei leicht unterschiedlicher Position der Vorrichtung relativ zum Radnabendeckel an eine Anlagekontur anlegen können. Die Anlagekontur wird an der Radnabe durch die Bünde der Radnabendeckelschrauben gebildet, so dass die Füße zwischen den Radnabendeckelschrauben aufgesetzt werden und in dem Zwischenraum zwischen zwei benachbarten Radnabendeckelschrauben zuverlässig in einer gewünschten Position fixiert werden können. Dazu weisen die zweiten Enden der Füße einen Außendurchmesser auf, der größer ist als der kleinste Abstand zwischen den zwei benachbarten Radnabendeckelschrauben, so dass die zweiten Enden der Füße im dem Zwischenraum zwischen zwei benachbarten Radnabendeckelschrauben anliegen und durch die Bünde der beiden benachbarten Radnabendeckelschrauben in einer bestimmten Position gehalten werden.

Damit die Vorrichtung zum Anbringen eines Lasers auch an unterschiedlichen Radnaben verschiedener Fahrzeugtypen angeordnet werden kann, sind vorzugsweise die Füße und/oder die ersten Enden der Füße auswechselbar, damit die Dimensionierung der ersten Enden der Füßen und damit die Anlagekontur entsprechend auf die Dimensionen der Radnabe oder die Anordnung der Radnabendeckelschrauben oder eine sonstige Anlagekontur der Radnabe angepasst werden kann.

Die erfindungsgemäße Vorrichtung wird insbesondere zum Justieren eines Abstandsregelsystems in Kraftfahrzeugen verwendet.

Das erfindungsgemäße Verfahren zum Justieren eines Abstandsregelsystems in Kraftfahrzeugen weist folgende Schritte auf:

Ein erster Laser wird seitlich am Kraftfahrzeug angebracht derart, dass die Strahlrichtung des ersten Lasers senkrecht zur Hinterachse des Kraftfahrzeugs ausgerichtet ist. Dazu wird eine erfindungsgemäße Vorrichtung zum Anbringen eines Lasers an der Radnabe verwendet. Ein zweiter Laser wird an dem Abstandsregelsystem derart angebracht, dass die Strahlrichtung des zweiten Lasers der Strahlungsachse des Abstandsregelsystems entspricht. Die Strahlungsachse sollte in der Benutzungsposition parallel zur Fahrzeuglängsachse ausgerichtet sein, damit sichergestellt ist, dass in Fahrrichtung des Fahrzeuges befindliche Gegenstände oder vorausfahrende Fahrzeuge mit Hilfe des Abstandsregelsystems erkannt und der Abstand zwischen derartigen Gegenständen und dem Kraftfahrzeug ermittelt werden kann. Um festzustellen, ob die Strahlrichtung des Abstandsregelsystems und somit die Strahlrichtung des zweiten Lasers parallel zur Kraftfahrzeuglängsachse verläuft, wobei die Strahlrichtung des ersten Lasers aufgrund der senkrechten Anordnung zur Hinterachse des Kraftfahrzeugs parallel zur Kraftfahrzeuglängsachse verläuft, werden die beiden Laserlichtstrahlen auf eine Wand abgebildet, welche vor dem Kraftfahrzeug im Wesentlichen senkrecht zur Verlängerung der Fahrzeuglängsachse angeordnet ist. Die beiden Abbildungspunkte werden markiert und anschließend wird die Wand längs der Verlängerung der Fahrzeuglängsachse verschoben. Die beiden Abbildungspunkte werden erneut auf der Wand markiert. Ist der Abstand der beiden Abbildungspunkte in den unterschiedlichen Positionen der Wand jeweils identisch, verlaufen die Strahlrichtungen des ersten und der zweiten Lasers zueinander parallel und die Strahlrichtung des Abstandsregelsystems ist wie gewünscht ausgerichtet. Wird eine Abweichung detektiert, muss die Strahlrichtung des Abstandsregelsystems entsprechend nachjustiert werden, bis in verschiedenen Positionen der Wand der Abstand zwischen den Abbildungspunkten gleich groß ist.

Vorzugsweise wird der erste Laser an der Radnabe der Hinterachse angeordnet, wodurch sichergestellt ist, dass die Strahlrichtung der ersten Lasers exakt senkrecht zur Längsachse der Hinterachse des Kraftfahrzeugs und somit exakt parallel zur Fahrzeuglängsachse ausgerichtet ist. Eine Verwendung von zwei Lasern, welche jeweils an jeden Hinterrad angeordnet werden, um die Spur der Hinterräder zu bestimmen, entfällt somit, so dass das Justierungsverfahren deutlich weniger aufwendig ist und schneller durchgeführt werden kann.

Falls gewünscht, kann der erste Laser erst an einem Ende der Radnabe und anschließend am anderen Ende der Radnabe angeordnet werden, wobei in beiden Positionen des Lasers das erfindungsgemäße Verfahren durchgeführt wird, so dass durch die zweite Messung an dem anderen Ende der Radnabe eine Überprüfung der Ergebnisse erzielt werden kann. Allerdings wird auch hierfür nur ein einziger Laser benötigt, welcher von einer Radnabe auf die andere umgesetzt wird, so dass die Kosten für einen weiteren Laser, der gleichzeitig mit dem ersten Laser am anderen Ende der Radnabe angeordnet werden muss, entfallen.

Ein Ausführungsbeispiel der Erfindung wird anhand der folgenden Figuren ausführlich erläutert.

Es zeigt:
- Fig. 1: eine perspektivische Ansicht eines Ausführungsbeispiels einer Vorrichtung zum Anbringen eines Lasers in auf einer Radnabe aufgesetzten Zustand,
- Fig. 2: eine Seitenansicht der Vorrichtung aus Fig. 1,
- Fig. 3: eine Draufsicht von Unten auf die Vorrichtung gemäß Fig. 1 und
- Fig. 4: eine schematische Darstellung eines Fahrzeugs mit zwei an dem Fahrzeug angeordneten Lasern zur Justierung eines Abstandsregelsystems.

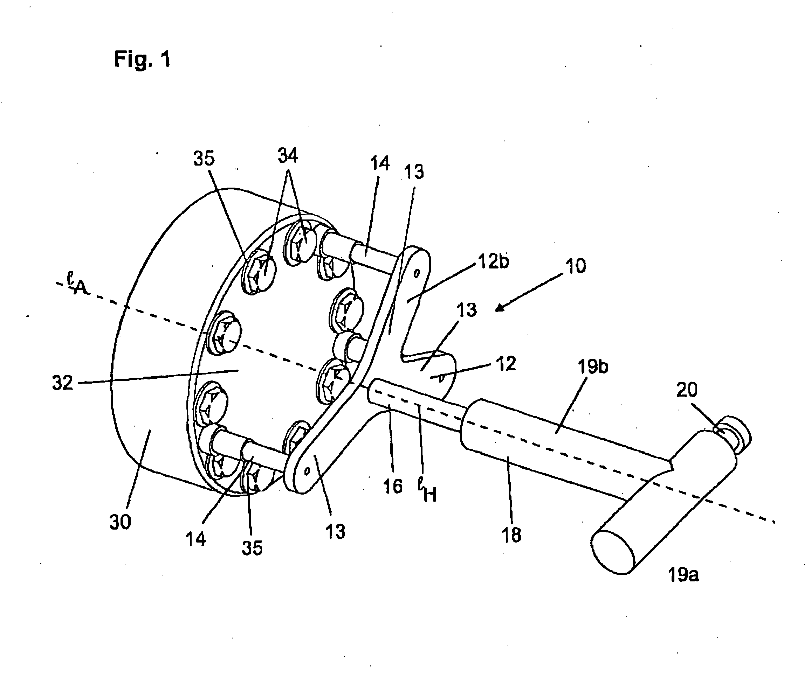

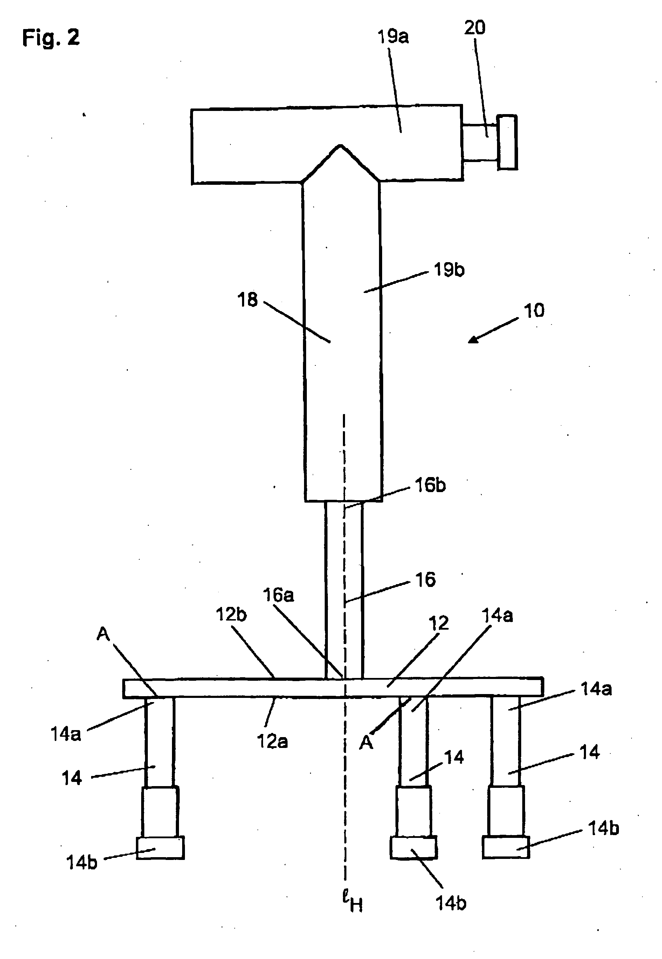

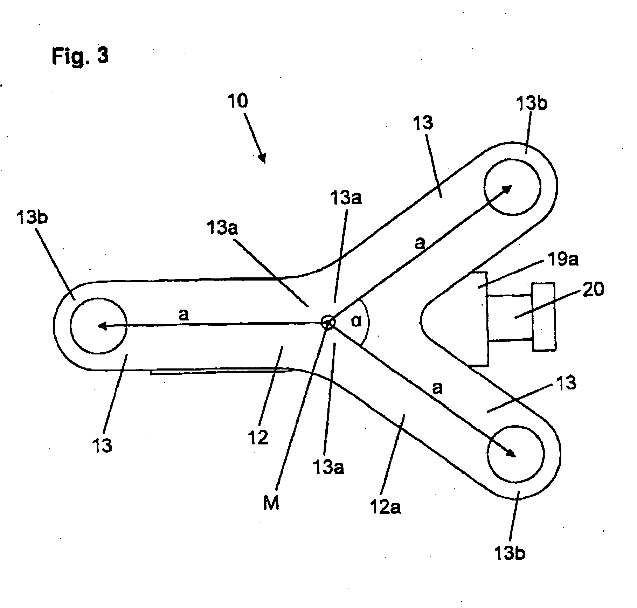

Die Figuren 1 bis 3 zeigen unterschiedliche Ansichten einer Vorrichtung 10 zum Anbringen eines ersten Lasers 20 an einer Radnabe 30, wobei gleiche Bezugsziffern stets gleiche Teile bezeichnen und der besseren Übersicht halber nicht in jeder Figur sämtliche Bezugsziffern eingetragen sind.

Die Vorrichtung 10 weist eine Grundplatte 12 mit einer ersten Seite 12a und einer zweiten Seite 12b auf. Die Grundplatte 12 ist Y-förmig mit drei Schenkeln 13 ausgebildet, welche jeweils ein erstes Ende 13a und zweites Ende 13b aufweisen. Die Schenkel 13 sind über ihr erstes Ende 13a miteinander verbunden und bilden die Y-förmige Grundplatte 12. Jeder Schenkel 13 der Grundplatte 12 weist die gleiche Länge auf. An dem zweiten Ende 13b eines jeden Schenkels 13 ist auf der ersten Seite 12a der Grundplatte 12 jeweils ein Fuß 14 angeordnet, welcher jeweils eine erstes Ende 14a und ein zweites Ende 14b aufweist. Die Füße 14 sind jeweils mit ihrem ersten Ende 14a an einem Ansatzpunkt A auf der ersten Seite 12a der Grundplatte 12 angeordnet, wobei die Ansatzpunkte A jeweils im Bereich des zweiten Endes 13b eines Schenkels 13 liegen. Die Grundplatte 12 weist einen Mittelpunkt M auf, in welchem sich die drei Schenkel 13 der Grundplatte 12 schneiden. Die Ansatzpunkte A weisen jeweils zu dem Mittelpunkt M einen Abstand a auf, welcher für jeden Ansatzpunkt A gleich ist. Die Füße 14, welche mit ihrer Längsachse jeweils senkrecht zu der Fläche der Grundplatte 12 stehen, liegen somit auf einem Kreis um dem Mittelpunkt M.

Die Grundplatte 12 kann auch als Kreisscheibe oder dreieckige Scheibe ausgebildet sein. Wesentlich auch bei derartiger Form der Grundplatte 12 ist jedoch, dass die Ansatzpunkte A auf einem Kreis um den Mittelpunkt M der Grundplatte 12 liegen. Die Y-Form der Grundplatte 12 ist jedoch bevorzugt, da sie einerseits besonders materialsparend ausgebildet werden kann, andererseits es jedoch ermöglicht wird, die Vorrichtung 10 auch bei an der Radnabe 30 montierten Bauteilen, wie beispielsweise Reifen oder Blendenhalterungen, auf die Radnabe 30 zu montieren, ohne die um die Radnabe 30 angeordneten Bauteile des Kraftfahrzeugs 40 in aufwendiger Arbeit abmontieren zu müssen. Dadurch wird das Verfahren zur Justierung des Abstandsensors 44 des Kraftfahrzeugs 40 wesentlich erleichtert.

Auf der zweiten Seite 12b der Grundplatte 12 ist ein Haltestab 16 angeordnet, welcher eine erstes Ende 16a, ein zweites Ende 16b und eine Längsachse lₕ aufweist. Der Haltestab 16 ist mit seinem ersten Ende 16a an der zweiten Seite 12b der Grundplatte 12 am Mittelpunkt M derart angeordnet, dass seine Längsachse l_{H} senkrecht zu der Ebene der Grundplatte 12 verläuft. An dem zweiten Ende 16b des Haltestabs 16 ist eine Halterung 18 für den ersten Laser 20 angeordnet. Die Halterung 18 besteht vorliegend im Wesentlichen aus einem T-förmigen Grundkörper mit einem Querbalken 19a und einen Längsbalken 19b. Der Querbalken 19a ist im Wesentlichen hohlzylindrisch ausgebildet, so dass in den Querbalken 19a der erste Laser 20 eingeschoben werden kann, wobei der Querbalken 19a einen derartigen Innendurchmesser aufweist, dass der erste Laser 20 derart in dem Querbalken 19a angeordnet werden kann, dass der erste Laser 20 im Wesentlichen koaxial im Querbalken 19a verläuft. Der erste Laser 20 weist eine Strahlrichtung s₁ auf, wobei durch die Anordnung des ersten Lasers 20 in dem Querbalken 19a der Halterung 18 sichergestellt ist, dass die Strahlrichtung s₁ senkrecht zu der Längsachse l_{H} des Halterstabs 16 verläuft und die Längsachse l_{H} des Haltestabs 16 schneidet. Der Längsbalken 19b der Halterung 18 weist im Wesentlichen eine nicht dargestellte Sackbohrung auf, in welche das zweite Ende 16b des Haltestabs 16 eingeführt werden kann. Die Sackbohrung des Längsbalkens 19b ist derart dimensioniert, dass der Längsbalken 19b und damit die Halterung 18 um die Längsachse l_{H} des Haltestabs 16 gedreht werden kann. Dadurch wird auch bei beliebiger Drehung der Grundplatte 12 um die Längsachse l_{H} des Haltestabs 16 zur Anordnung der Vorrichtung 10 an der Radnabe 30 ermöglicht, die Halterung 18 mit dem darin angeordneten ersten Lasers 20 derart auszurichten, dass die Strahlrichtung s₁ des ersten Lasers 20 im Wesentlichen horizontal verläuft.

Die Grundplatte 12 weist genau drei Füße 14 auf, damit die Grundplatte 12 eben auf die Radnabe 30 aufgesetzt werden kann. Wie in Fig. 1 dargestellt, weist die Radnabe 30 einen Radnabendeckel 32 auf, welcher mittels mehrerer Radnabendeckelschrauben 34 befestigt ist. Der Radnabendeckel 32 ist rund und die Radnabendeckelschrauben 34 sind am Rand des Radnabendeckels 32 angeordnet, so dass sie ebenfalls auf einem Kreis liegen. Dabei sind die Radnabendeckelschrauben 34 als Bundschrauben mit einem Bund 35 ausgebildet.

Die Vorrichtung 10 wird mit ihren Füßen 14 derart angeordnet, dass die zweiten Enden 14b jeweils zwischen zwei benachbarten Radnabendeckelschrauben 34 zu liegen kommen. Die zweiten Enden 14b der Füße 14 sind mit einem Magneten ausgestattet, um sicherzustellen, dass die Füße 14 an dem senkrecht stehenden Radnabendeckel 32 der Radnabe 30 befestigt werden können. Eine derartige Befestigung ist besonders einfach herzustellen und zu lösen und zudem ist gewährleistet, dass die Vorrichtung 10 sicher an der Radnabe 30 fixiert ist.

Die Winkel zwischen den einzelnen Schenkeln 13 der Grundplatte 12 können jeweils 120° betragen, vorzugsweise wird jedoch zwischen zwei Schenkeln 13 ein Winkel α gebildet, welcher etwa 60° bis 100°, vorzugsweise 70° beträgt. Dieser Ausgestaltung der Grundplatte 12 stellt für einen bestimmten Typ von Radnaben 30 mit vorgegebener Position der Radnabendeckschrauben 34 sicher, dass jeder Fuß 14 in einen Zwischenraum zwischen zwei benachbarten Radnabendeckschrauben 34 eingesetzt werden kann.

Damit die Vorrichtung 10 an beliebige Ausgestaltungen der Radnaben 30 angepasst werden kann, ist es von Vorteil, wenigstens einen der Schenkel 13, vorzugsweise jedoch zwei Schenkel 13 der Grundplatte 12 als um den Mittelpunkt M der Grundplatte 12 in der Ebene der Grundplatte 12 verschwenkbar auszubilden. Damit wird ermöglicht, dass auch bei unterschiedlicher Anordnung der Radnabendeckelschrauben 34 auf der Radnabe 30 ermöglicht wird, die Füße 14 der Grundplatte 12 zwischen den Radnabendeckelschrauben 34 zu positionieren.

Die zweiten Enden 14b der Füße 14 weisen eine Anlagekontur auf, welche an einer entsprechend ausgebildeten Anlagekontur der Radnabe 30 oder des Radnabendeckels 32 zu liegen kommen. Dadurch wird gewährleistet, dass die Vorrichtung 10 in einer gewünschten Position relativ zu der Radnabe 30 ausgerichtet ist.

Bei der vorliegenden Ausführungsform sind die zweiten Enden 14b der Füße 14 im Wesentlichen zylindrisch ausgebildet. Die Anlagekontur der Radnabe 30 wird im Wesentlichen durch die Radnabendeckelschrauben 34, insbesondere durch deren Bünde 35, gebildet. Die zweiten Enden 14b der Füße 14 kommen zwischen jeweils zwei benachbarten Radnabendeckelschrauben 24 zu liegen und werden durch die Bünde 35 der Radnabendeckelschrauben 34 in einer gewünschten Position fixiert.

Um die zweiten Enden 14b der Füße 14 zwischen zwei benachbarten Radnabendeckschrauben 34 in einer fest vorgegebenen Position positionieren zu können, ist das zweite Ende 14b der Füße 14 mit einem Außendurchmesser ausgestattet, welcher größer ist als der kleinste Abstand zwischen zwei benachbarten Radnabendeckelschrauben 34. Zudem sollte dabei der Abstand a der Ansatzpunkte A zu dem Mittelpunkt M der Grundplatte 12 größer sein als der Abstand der Achsen der Radnabendeckelschrauben 34 zu der Längsachse l_{A} der Hinterachse 42. Damit ist sichergestellt, dass die zweiten Enden 14b der Füße 14 in dem Zwischenraum zwischen zwei benachbarten Nabendeckelschrauben 34 anliegen können und jeweils mit einem Berührungspunkt an dem Bund 35 der benachbarten Radnabendeckelschrauben 34 anschlagen. Die relative Ausrichtung der Vorrichtung 10 gegenüber der Radnabe 30 ist somit fest vorgegeben, wobei in dieser Position der Längsachse l_{A} der Hinterachse 42 mit der Längsachse l_{H} des Haltestabs 16 fluchtet.

Alternativ können die zweiten Enden 14b der Füße 14 auch so ausgestaltet sein, dass sie jeweils auf einen Kopf einer der Radnabendeckelschrauben 34 aufgesetzt werden können.

Der Abstand a zwischen den Ansatzpunkten A und dem Mittelpunkt M ist dabei für die entsprechende Dimensionierung der Radnaben 30 eines Fahrzeugstyps ausgelegt. Um die Vorrichtung 10 auch bei unterschiedlich dimensionierten Radnaben 30 mit unterschiedlicher Anzahl oder verschiedener Größe von Radnabendeckelschrauben 34 verwenden zu können, können die zweiten Enden 14b der Füße 14 oder die vollständigen Füße 14 auswechselbar an der Grundplatte 12 angeordnet werden. Dadurch wird gewährleistet, dass für jede Radnabe 30 mit der entsprechenden Anzahl an Radnabendeckschrauben 34 die Füße 14 mit den zweiten Enden 14b derart gewählt werden, dass die zweiten Enden 14b der Füße 14 in dem Zwischenraum der Radnabendeckschrauben 34 oder gegebenenfalls einer anderen Anlagekontur der Radnabe 30 derart zu liegen kommen, dass die Längsachse l_{H} des Haltestabs 16 mit der Längsachse l_{A} der Hinterachse 42 fluchtet. Das Anbringen der Vorrichtung 10 an der Radnabe 30 hat den Vorteil, dass ein exaktes Fluchten der Längsachse l_{H} des Haltestabs 16 mit der Längsachse l_{A} der Hinterachse 42 gewährleistet ist, da die Radnabe 30 zentrisch zur Hinterachse 42 liegt, die Radfelge jedoch oft nicht.

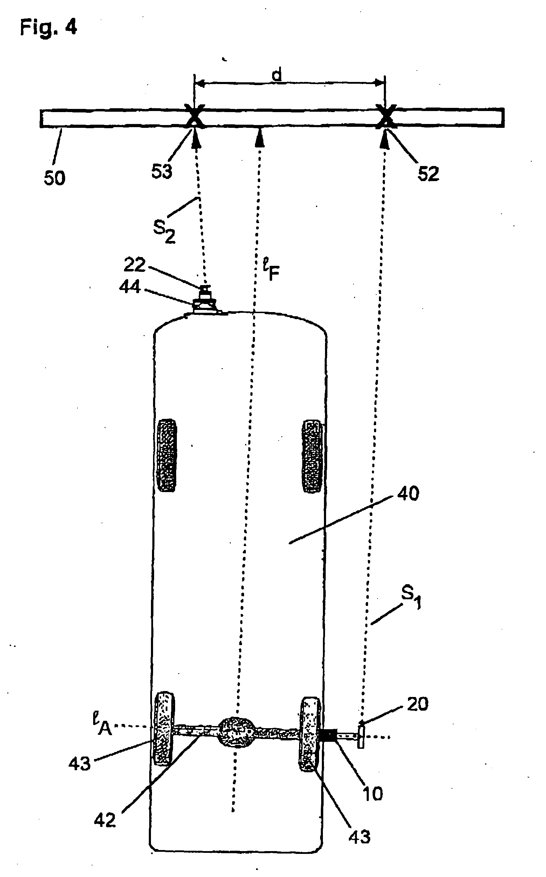

Fig. 4 zeigt schematisch ein Kraftfahrzeug 40 mit einer Hinterachse 42, an welcher zwei Hinterräder 43 angeordnet sind. An dem Kraftfahrzeug 40 ist ein Abstandsregelsystem 44 an der Frontseite des Kraftfahrzeugs 40 angeordnet. Das Abstandsregelsystem 44 kann bsp. aus einem optischen System oder einem Radarsystem bestehen. Durch die Hinterachse 42, welche eine Längsachse l_{A} aufweist, ist ein Fahrzeuglängsachse l_{F} definiert, welche die Längsachse l_{A} der Hinterachse 43 halbiert und senkrecht schneidet. Die Hinterachse 42 definiert im Wesentlichen die Fahrtrichtung des Kraftfahrzeuges 40. Daher ist es wünschenswert, dass die Strahlrichtung des Abstandsregelsystems 44 parallel zur Fahrzeuglängsachse l_{F} verläuft, um vor dem Kraftfahrzeug 40 befindliche Gegenstände mit Hilfe des Abstandsregelsystems 44 detektieren zu können und den Abstand zu derartigen Gegenständen ermitteln zu können.

Um das Abstandsregelsystem 44 wie gewünscht ausrichten und justieren zu können, wird an dem Abstandsregelsystem 44 ein zweiter Laser 22 mit einer Strahlrichtung s₂ derart angeordnet, dass die Strahlrichtung s₂ des zweiten Lasers 22 im Wesentlichen mit der Strahlrichtung des Abstandsregelsystems 44 übereinstimmt. Der erste Laser 20 wird über die Vorrichtung 10 an der Radnabe 30 der Hinterachse 42 derart angeordnet, dass die Strahlrichtung s₁ des ersten Lasers 20 senkrecht zu der Hinterachse 42 verläuft. Dies wird bspw. durch die Geometrie der Vorrichtung 10 wie in den Figuren 1 bis 3 gezeigt erreicht. Da durch die Ausgestaltung der Halterung 18 gewährleistet ist, dass die Strahlrichtung s₁ des ersten Lasers 20 senkrecht zu der Längsachse l_{H} des Haltestabs 16 verläuft und diese Längsachse l_{H} des Haltestabs 16 schneidet und zudem bei Anlegen der Vorrichtung 10 an die Radnabe 30 durch die Anlagekonturen gewährleistet ist, dass die Längsachse l_{H} des Haltestabs 16 mit der Längsachse l_{A} der Hinterachse 42 fluchtet, verläuft somit die Strahlrichtung s₁ des ersten Lasers 20 exakt parallel zu der Fahrzeuglängsachse l_{F} des Kraftfahrzeugs 40. Dazu muss gegebenenfalls, sobald die Vorrichtung 10 an der Radnabe angeordnet ist, die Halterung 18 um die Längsachse l_{H} der Halterung 16 derart gedreht werden, dass die Strahlrichtung s₁ des ersten Lasers 20 horizontal verläuft.

Wie in Figur 4 dargestellt, ist somit die Strahlrichtung s₁ des ersten Lasers 20 über die Vorrichtung 10 parallel zu der Fahrzeuglängsachse l_{F} des Kraftfahrzeugs 40 ausgerichtet. Vor dem Kraftfahrzeug 40 im Wesentlichen senkrecht zur Verlängerung der Fahrzeugslängsachse l_{F} ist eine Wand 50 angeordnet, auf welche der Lichtstrahl des ersten Lasers 20 in einen Abbildungspunkt 52 abgebildet wird. Der Lichtstrahl des zweiten Lasers 22 wird ebenfalls in einen Abbildungspunkt 53 auf der Wand 50 abgebildet. Die beiden Abbildungspunkte 52, 53 liegen in einem Abstand d auf der Wand 50. Die Abbildungspunkte 52, 53 werden auf der Wand 50 markiert, wobei anschließend die Wand 50 in Richtung der Fahrzeuglängsachse l_{F} entweder auf das Kraftfahrzeug 40 zu oder von dem Kraftfahrzeug 40 wegbewegt wird, wobei weiterhin die Wand 50 im Wesentlichen senkrecht zu der Fahrzeuglängsachse l_{F} des Kraftfahrzeugs 40 stehen sollte. Vorzugsweise wird dabei die Wand um mehrere Meter aus ihrer ersten Position heraus bewegt. In der zweiten Position werden ebenfalls die beiden Abbildungspunkte 52, 53 des ersten und zweiten Lasers 20, 22 markiert und der Abstand d zwischen den Abbildungspunkten 52, 53 bestimmt. Die Bestimmung des Abstands d zwischen den Abbildungspunkten 52, 53 kann mit einem einfachen Lineal durchgeführt werden, ohne dass dafür aufwendige Messskalen von Nöten sind. Bleibt der Abstand d zwischen den Abbildungspunkten 52, 53 in beiden Positionen der Wand 50 relativ zu dem Kraftfahrzeug 40 gleich, sind die Strahlrichtungen s₁ und s₂ der beiden Laser 20, 22 parallel. Verändert sich der Abstand d zwischen den Abbildungspunkten 52, 53, muss der zweite Laser 22 und damit das Abstandsregelsystem 44 mit seiner Strahlrichtung justiert werden solange, bis der Abstand d zwischen den Abbildungspunkten 52, 53 der beiden Laser 20, 22 in verschiedenen Positionen der Wand 50 relativ zu dem Kraftfahrzeug 40 gleich ist. Auf diese Weise kann das Abstandsregelsystem 44 besonders einfach justiert werden, da lediglich eine Wand 50 benötigt wird, auf welche die Lichtstrahlen der Laser 20, 22 abgebildet werden können, ohne dass eine aufwendige Messskala oder eine exakte Positionsbestimmung der Abbildungspunkte 52, 53 nötig ist. Insbesondere ist es möglich, die

Wand mit einer Toleranz von +/- 3° gegenüber der Senkrechten zu der Fahrzeuglängsachse auszurichten, so dass auch hier keine exakte Positionierung nötig ist, was die Durchführung des Verfahrens vereinfacht und beschleunigt. Ferner genügt ein einziger Laser zum Anbringen an der Hinterachse 42, da auf Grund des Anbringens der Vorrichtung 10 an der Radnabe 40 der Hinterachse 42 gewährleistet ist, dass die Strahlrichtung s₁ des ersten Lasers 20 exakt parallel zu der Fahrzeuglängsachse l_{F} des Kraftfahrzeugs 40 verläuft. Die Verwendung eines weiteren Lasers an der zweiten Radnabe 30 des Kraftfahrzeugs 40 ist somit nicht von Nöten. Zur Überprüfung der Messergebnisse kann allerdings der erste Laser 20 mit der Vorrichtung 40 auch nochmals auf der anderen Radnabe 30 der Hinterachse 42 angeordnet werden.

### Bezugszeichenliste

- 10: Vorrichtung

- 12: Grundplatte
- 12a: erste Seite
- 12b: zweite Seite

- 13: Schenkel
- 13a: erstes Ende
- 13b: zweites Ende

- 14: Fuß
- 14a: erstes Ende
- 14b: zweites Ende

- 16: Haltestab
- 16a: erstes Ende
- 16b: zweites Ende

- 18: Halterung
- 19a: Querbalken
- 19b: Längsbalken

- 20: erster Laser
- 22: zweiter Laser

- 30: Radnabe
- 32: Radnabendeckel
- 34: Radnabendeckelschraube
- 35: Bund

- 40: Kraftfahrzeug
- 42: Hinterachse
- 43: Hinterrad
- 44: Abstandsregelsystem

- 50: Wand
- 52: Abbildungspunkt
- 53: Abbildungspunkt

- M: Mittelpunkt
- A: Ansatzpunkt
- a: Abstand
- d: Abstand

- l_{H}: Längsachse des Halterstabs
- l_{A}: Längsachse der Hinterachse
- l_{F}: Fahrzeuglängsachse
- s₁: Strahlrichtung des ersten Lasers
- s₂: Strahlrichtung des zweiten Lasers

- α: Winkel

## Patentansprüche

1. Vorrichtung (10) zum Anbringen eines ersten Lasers (20) an der Radnabe (30) eines Kraftfahrzeugs (40) mit einer Grundplatte (12) mit einem Mittelpunkt (M), wobei auf einer ersten Seite (12a) der Grundplatte (12) drei Füße (14) mit ihrem ersten Ende (14a) in jeweils einem Ansatzpunkt (A) angeordnet sind, wobei der Abstand (a) der Ansatzpunkte (A) zu dem Mittelpunkt (M) der Grundplatte (12) für jeden Ansatzpunkt (A) gleich ist, wobei an und/oder in dem zweiten Ende (14b) der Füße (14) ein Magnet angeordnet ist und die zweiten Enden (14b) der Füße (14) eine Anlagekontur aufweisen, die an eine Anlagekontur an der Radnabe (30) angepasst, anlegbar ist und die Anlagekontur an der Radnabe (30) durch Bünde (35) der Radnabendeckelschrauben (34) gebildet ist und die zweiten Enden (14b) der Füße (14) einen Außendurchmesser aufweisen, der größer ist als der kleinste Abstand zwi- schen zwei benachbarten Radnabendeckelschrauben (34), wobei auf einer zweiten Seite (12b) der Grundplatte (12), welche der ersten Seite (12a) der Grundplatte (12) gegenüberliegt, ein Haltestab (16) mit seinem ersten Ende (16a) an dem Mittelpunkt (M) der Grundplatte (12) angeordnet ist, wobei die Längsachse (l_{H}) des Haltestabs (16) senkrecht zu der Grundplatte (12) steht, und wobei an dem zweiten Ende (16b) des Haltestabs (16) eine Halterung (18) für den ersten Laser (20) derart angeordnet ist, dass bei Anordnung des ersten Lasers (20) in der Halterung (18) die Strahlrichtung (s₁) des ersten Lasers (20) senkrecht zur Längsachse (l_{H}) des Haltestabs (16) verläuft.

2. Vorrichtung nach Anspruch 1,
**dadurch gekennzeichnet, dass** die Grundplatte (12) Y-förmig mit drei Schenkeln (13) ausgebildet ist.

3. Vorrichtung nach Anspruch 2,
**dadurch gekennzeichnet, dass** zumindest zwei der Schenkel (13) der Y-förmigen Grundplatte (12) einen Winkel (α) von 60° bis 100°, vorzugsweise einen Winkel (α) von etwa 70°, einschließen.

4. Vorrichtung nach Anspruch 2 oder 3,
**dadurch gekennzeichnet, dass** zumindest einer der Schenkel (13) der Y-förmigen Grundplatte (12) um den Mittelpunkt (M) der Grundplatte (12) in der Ebene der Grundplatte (12) verschwenkbar ist.

5. Vorrichtung nach einem der vorhergehenden Ansprüche,
**dadurch gekennzeichnet, dass** die Halterung (18) für den ersten Laser (20) um die Längsachse (l_{H}) des Haltestabs (16) drehbar angeordnet ist.

6. Vorrichtung nach einem der vorhergehenden Ansprüche,
**dadurch gekennzeichnet, dass** die zweiten Enden (14b) der Füße (14) als Kreisscheiben ausgebildet sind.

7. Vorrichtung nach einem der vorhergehenden Ansprüche,
**dadurch gekennzeichnet, dass** die Füße (14) und/oder die zweiten Enden (14b) der Füße (14) auswechselbar sind.

8. Verwendung einer Vorrichtung (10) nach einem der vorhergehenden Ansprüche zum Justieren eines Abstandsregelsystems (44) in Kraftfahrzeugen (40).

9. Verfahren zum Justieren eines Abstandsregelsystems (44) in Kraftfahrzeugen (40) mit den Schritten
- Anbringen eines ersten Lasers (20) seitlich am Kraftfahrzeug (40) mit Ausrichtung der Strahlrichtung (s₁) des ersten Lasers (20) senkrecht zur Hinterachse (42) des Kraftfahrzeugs (40) und nach vorn weisend mittels einer Vorrichtung (10) nach einem der Ansprüche 1 bis 7,
- Anbringen eines zweiten Lasers (22) an dem Abstandsregelsystem (44) derart, dass die Strahlrichtung (s₂) des zweiten Lasers (22) der Strahlungsachse des Abstandsregelsystems (44) entspricht,
- Abbilden der Laserlichtstrahlen auf eine Wand (50), welche vor dem Kraftfahrzeug (40) im wesentlichen senkrecht zur Verlängerung der Fahrzeuglängsachse (l_{F}) angeordnet ist,
- Markieren der beiden Abbildungspunkte (52, 53),
- Verschieben der Wand (50) längs der Verlängerung der Fahrzeuglängsachse (l_{F}) und
- erneutes Markieren der beiden Abbildungspunkte (52, 53).

10. Verfahren nach Anspruch 9,
**dadurch gekennzeichnet, dass** die Abstände (d) der Abbildungspunkte (52, 53) in den unterschiedlichen Positionen der Wand (50) erfasst und verglichen werden.

11. Verfahren nach Anspruch 9 oder 10,
**dadurch gekennzeichnet, dass** der erste Laser (20) an der Radnabe'(30) der Hinterachse (42) angeordnet wird.

12. Verfahren nach einem der Ansprüche 9 bis 11,
**dadurch gekennzeichnet, dass** der erste Laser (20) erst an einem Ende der Radnabe (30) und anschließend an dem anderen Ende der Radnabe (30) angeordnet wird, wobei in beiden Positionen ein Verfahren nach einem der Ansprüche 9 bis 11 durchgeführt wird.

## Claims

1. Device (10) for attaching a first laser (20) to the wheel hub (30) of a motor vehicle (40), comprising a baseplate (12) having a centre point (M), wherein arranged on a first side (12a) of the baseplate (12) are three feet (14) with their first end (14a) at a respective starting point (A), wherein the distance (a) of the starting points (A) from the centre point (M) of the baseplate (12) is the same for each starting point (A), wherein a magnet is arranged on and/or in the second end (14b) of the feet (14), and the second ends (14b) of the feet (14) have a bearing contour which is adapted to a bearing contour on the wheel hub (30), and the bearing contour on the wheel hub (30) is formed by collars (35) of the wheel hub cover screws (34), and the second ends (14b) of the feet (14) have an outer diameter which is greater than the smallest distance between two adjacent wheel hub cover screws (34), wherein arranged on a second side (12b) of the baseplate (12), which is located opposite the first side (12a) of the baseplate (12), is a holding rod (16) with its first end (16a) at the centre point (M) of the baseplate (12), wherein the longitudinal axis (l_{H}) of the holding rod (16) is perpendicular to the baseplate (12), and wherein a mount (18) for the first laser (20) is arranged at the second end (16b) of the holding rod (16) in such a way that, when the first laser (20) is arranged in the mount (18), the emission direction (s₁) of the first laser (20) runs perpendicular to the longitudinal axis (l_{H}) of the holding rod (16).

2. Device according to claim 1, **characterised in that** the baseplate (12) is Y-shaped with three legs (13).

3. Device according to claim 2, **characterised in that** at least two of the legs (13) of the Y-shaped baseplate (12) enclose an angle (α) of 60° to 100°, preferably an angle (α) of approximately 70°.

4. Device according to claim 2 or 3, **characterised in that** at least one of the legs (13) of the Y-shaped baseplate (12) is pivotable about the centre point (M) of the baseplate (12) in the plane of the baseplate (12).

5. Device according to one of the preceding claims, **characterised in that** the mount (18) for the first laser (20) is arranged such that it can rotate about the longitudinal axis (l_{H}) of the holding rod (16).

6. Device according to one of the preceding claims, **characterised in that** the second ends (14b) of the feet (14) are designed as circular discs.

7. Device according to one of the preceding claims, **characterised in that** the feet (14) and/or the second ends (14b) of the feet (14) are replaceable.

8. Use of a device (10) according to one of the preceding claims for adjusting a distance control system (44) in motor vehicles (40).

9. Method for adjusting a distance control system (44) in motor vehicles (40), comprising the steps:
- attaching a first laser (20) to the side of the motor vehicle (40) with the emission direction (s₁) of the first laser (20) oriented perpendicular to the rear axle (42) of the motor vehicle (40) and pointing forwards, by means of a device (10) according to one of claims 1 to 7,
- attaching a second laser (22) to the distance control system (44) in such a way that the emission direction (s₂) of the second laser (22) corresponds to the emission axis of the distance control system (44),
- projecting the laser light beams onto a wall (50) which is arranged in front of the vehicle (40) essentially perpendicular to the extension of the vehicle longitudinal axis (l_{F}),
- marking the two projection points (52, 53),
- displacing the wall (50) along the extension of the vehicle longitudinal axis (l_{F}), and
- again marking the two projection points (52, 53).

10. Method according to claim 9, **characterised in that** the distances (d) between the projection points (52, 53) in the different positions of the wall (50) are recorded and compared.

11. Method according to claim 9 or 10, **characterised in that** the first laser (20) is arranged on the wheel hub (30) of the rear axle (42).

12. Method according to one of claims 9 to 11, **characterised in that** the first laser (20) is arranged first at one end of the wheel hub (30) and then at the other end of the wheel hub (30), a method according to one of claims 9 to 11 being carried out in both positions.

## Revendications

1. Dispositif (10) pour fixer un premier laser (20) sur le moyeu de roue (30) d'un véhicule automobile (40) avec une plaque de base (12) de centre (M),
une première face (12a) de la plaque de base (12) comporte trois pieds (14) dont la première extrémité (14a) est installée chaque fois en un point d'appui (A),
la distance (a) des points d'appui (A) par rapport au centre (M) de la plaque de base (12) est la même pour chaque point d'appui (A),
sur et/ou dans la seconde extrémité (14b) des pieds (14), il est prévu un aimant et les secondes extrémités (14b) des pieds (14) ont un contour d'appui adapté au contour d'appui du moyeu (30) et ce contour d'appui du moyeu (30) est formé par les collerettes (35) des vis de couvercle du moyeu (34), et
les secondes extrémités (14b) des pieds (14) ont un diamètre extérieur supérieur à la plus petite distance entre deux vis de couvercle de moyeu (34), voisines,
la seconde face (12b) de la plaque de base (12) à l'opposé de la première face (12a) de la plaque de base (12) porte une tige de fixation (16) avec une première extrémité (16a) appliquée au centre (M) de la plaque de base (12),
l'axe longitudinal (l_{H}) de la tige de fixation (16) est perpendiculaire à la plaque de base (12), et
la seconde extrémité (16b) de la tige de fixation (16) comporte un moyen de fixation (18) pour le premier laser (20) de façon que lorsque ce premier laser (20) est installé dans le moyen de fixation (18), la direction (s₁) du faisceau du premier laser (20) soit perpendiculaire à l'axe longitudinal (l_{H}) de la tige de fixation (16).

2. Dispositif selon la revendication 1,
**caractérisé en ce que**
la plaque de base (12) est en forme de Y avec trois branches (13).

3. Dispositif selon la revendication 2,
**caractérisé en ce qu'**
au moins deux des branches (13) de la plaque de base (12) en forme de Y font entre elles un angle (α) compris entre 60° et 100° et de préférence un angle (α) de l'ordre de 70°.

4. Dispositif selon la revendication 2 ou 3,
**caractérisé en ce qu'**
au moins l'une des branches (13) de la plaque de base (12) en forme de Y peut pivoter autour du centre (M) de la plaque de base (12) dans le plan de la plaque de base (12).

5. Dispositif selon les revendications précédentes,
**caractérisé en ce que**
le moyen de fixation (18) du premier laser (20) est monté à rotation autour de l'axe longitudinal (l_{H}) de la tige de fixation (16).

6. Dispositif selon les revendications précédentes,
**caractérisé en ce que**
les secondes extrémités (14b) des pieds (14) sont réalisées sous la forme de disques circulaires.

7. Dispositif selon les revendications précédentes,
**caractérisé en ce que**
les pieds (14) et/ou les secondes extrémités (14b) des pieds (14) sont interchangeables.

8. Utilisation d'un dispositif (10) selon les revendications précédentes pour ajuster un système de régulation de distance (44) dans des véhicules automobiles (40).

9. Procédé d'ajustage d'un système de régulation de distance (44) dans des véhicules automobiles (40) comprenant les étapes suivantes :
- installation d'un premier laser (20) latéralement sur le véhicule automobile (40) en alignant la direction du faisceau (s₁) du premier laser (20) perpendiculairement à l'essieu arrière (42) du véhicule automobile (40) et en le dirigeant vers l'avant, à l'aide d'un dispositif (10) selon les revendications 1 à 7,
- installation d'un second laser (22) sur le système de régulation de distance (44) de façon que la direction du faisceau (s₂) du second laser (22) corresponde à l'axe du faisceau du système de régulation de distance (44),
- copie du faisceau laser sur une paroi (50) située devant le véhicule automobile (40) pratiquement perpendiculaire au prolongement de l'axe longitudinal (l_{F}) du véhicule,
- marquage des deux points image (52, 53),
- décalage de la paroi (50) suivant le prolongement de l'axe longitudinal (l_{F}) du véhicule, et
- nouveau marquage des deux points image (52, 53).

10. Procédé selon la revendication 9,
**caractérisé en ce qu'**
on saisit la distance (d) des points image (52, 53) dans des positions différentes de la paroi (50) et on les compare.

11. Procédé selon la revendication 9 ou 10,
**caractérisé en ce qu'**
on installe le premier laser (20) sur le moyeu de roue (30) de l'essieu arrière (42).

12. Procédé selon les revendications 9 à 11,
**caractérisé en ce qu'**
on installe le premier laser (20) à une première extrémité du moyeu de roue (30) et ensuite, à la seconde extrémité du moyeu de roue (30), et dans les deux positions, on exécute un procédé selon les revendications 9 à 11.
